# EUROPÄISCHE PATENTSCHRIFT

(11) **EP 0 916 553 B1**
(45) Veröffentlichungstag und Bekanntmachung des Hinweises auf die Patenterteilung: **14.08.2002**
(21) Anmeldenummer: 98120157.7
(22) Anmeldetag: 28.10.1998
(51) Int. Cl.: B60R 21/20

(54) **Abdeckkappe für einen Airbag**
Cover for an airbag
Couvercle pour un coussin gonflable

(30) Priorität: 13.11.1997 DE 29720139 U
(43) Veröffentlichungstag der Anmeldung: 19.05.1999
(73) Patentinhaber: TRW Automotive Safety Systems GmbH & Co. KG, 63743 Aschaffenburg (DE)
(72) Erfinder: Kreile, Holger, 63820 Elsenfeld (DE)
(74) Vertreter: Degwert, Hartmut, Dipl.-Phys.

(56) Entgegenhaltungen:
- EP-A- 0 568 764
- EP-A- 0 572 125
- DE-A- 4 133 881
- DE-A- 19 614 078

## Beschreibung

Die Erfindung betrifft eine Abdeckkappe für die Austrittsöffnung eines in einem Lenkrad untergebrachten Airbags, wobei die Abdeckkappe zur Betätigung der Hupkontakte gegen eine Rückstellkraft im wesentlichen senkrecht zu ihrer flächigen Erstreckung um mindestens den Kontaktabstand beweglich angeordnet ist.

Bei derartigen Abdeckkappen läßt sich ein Bewegungsspalt zur die Abdeckkappe randseitig umgebenden Struktur des Lenkrades nicht vermeiden, obwohl er aus optischen Gründen unerwünscht ist. Er wird daher möglichst schmal gehalten, muß aber mindestens so breit sein, daß unter Berücksichtigung sämtlicher Fertigungstoleranzen eine berührungsfreie Bewegung der Abdeckkappe gegenüber der Lenkradumgebung möglich ist. Dieser Bewegungsspalt erstreckt sich im wesentlichen in Verlängerung der dem Fahrgastraum zugewandten Oberfläche der Abdeckkappe.

Senkrecht zu dieser Oberfläche ist ein weiterer Bewegungsspalt erforderlich, der etwas größer sein muß als der Abstand zwischen den zur Betätigung der Hupe erforderlichen Kontakten, die einerseits relativ zum Lenkrad feststehend und andererseits mit der Abdeckkappe beweglich angeordnet sind. Zwischen einem feststehenden Rahmen oder einem anderen relativ zum Lenkrad unbeweglichen Bauteil und dem Rand der Abdeckkappe, der üblicherweise mit einem deckelartigen Steg ausgebildet ist, muß also ein Abstand eingehalten werden, der dem zur Betätigung der Hupe notwendigen Bewegungsspalt entspricht. Der von der Abdeckkappe überdeckte Raum kann daher gegen seine Umgebung nicht soweit abgeschlossen werden, daß das Eindringen von Feuchtigkeit und Staub vermieden wird. Außerdem wird vielfach beanstandet, daß der zur Betätigung der Hupkontakte erforderliche Bewegungsspalt optisch störend ist, weil man durch ihn in den von der Abdeckkappe überdeckten Innenraum hineinsehen kann.

Durch die Erfindung wird eine Abdeckkappe der eingangs genannten Art geschaffen, die den zur Betätigung der Hupkontakte erforderlichen Bewegungsspalt vollständig abdeckt, damit das Eindringen von Staub und Feuchtigkeit erschwert und das "Sichtfenster" in den Innenraum geschlossen wird. Die optische und physische Abdeckung des Bewegungsspaltes wird konstengünstig bewerkstelligt und kann mit den bisher für die Herstellung von Abdeckkappen benutzten Fertigungseinrichtungen hergestellt werden.

Erfindungsgemäß ist an die Abdeckkappe, die aus Kunststoff besteht, randseitig ein sich in Bewegungsrichtung der Abdeckkappe erstreckender, flexibler Steg angespritzt, der bei einer Bewegung der Abdeckkappe zur Betätigung der Hupkontakte elastisch verformt wird. Der Steg ist vorzugsweise so gebildet, daß er randseitig umläuft und den für die Betätigung der Hupkontakte zwischen der Abdeckkappe und einem feststehenden Rahmen oder dergl. erforderlichen Bewegungsspalt überdeckt.

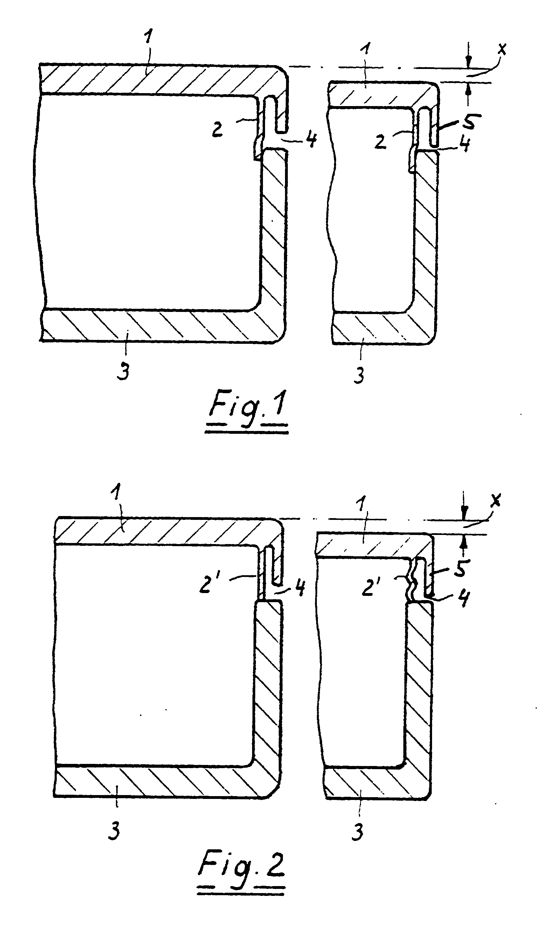

Zweckmäßige Ausgestaltungen des Erfindungsgedankens sind in den Unteransprüchen 4 bis 7 beschrieben. Weitere Einzelheiten werden anhand der in den Figuren 1 und 2 dargestellten Ausführungsbeispiele näher erläutert. Es zeigen:
Fig. 1 eine erste Ausführungsform der erfindungsgemäßen Abdeckkappe im Schnitt.
Fig. 2 eine zweite Ausführungsform der erfindungsgemäßen Abdeckkappe ebenfalls im Schnitt.

Fig. 1 zeigt die erste Ausführungsform links bei nicht betätigter Abdeckkappe 1 und rechts bei einer um den Kontaktweg x niedergedrückten Abdeckkappe 1. In der linken Darstellung ist zwischen einem feststehenden Rahmen 3 oder dergl. und dem deckelartigen Rand der Abdeckkappe 1 ein Bewegungsspalt 4 vorhanden, der etwas größer sein muß als der Kontaktweg x, damit nicht der Rahmen der Abdeckkappe 1 am feststehenden Rahmen 3 zur Anlage kommt, bevor der Hupkontakt hergestellt ist. An der Abdeckkappe 1 ist ein randseitig umlaufender Steg 2 angespritzt, der endseitig in den feststehenden Rahmen 3 eingreift und sich beim Niederdrücken der Abdeckkappe 1 teleskopartig in den Rahmen 3 hineinschiebt, wobei er seitlich ausgelenkt wird, infolge seiner elastischen Rückstellkräfte aber am Rahmen 3 anliegend gehalten wird. Eine derartige Teleskopführung der Abdeckkappe 1 im Rahmen 3 mittels eines harten, unelastischen Steges kommt nicht in Betracht, weil dabei eine Reihe sich addierender Fertigungstoleranzen berücksichtigt werden müßte, was sehr aufwendig wäre, gleichwohl aber ein Festklemmen der Abdeckkappe im feststehenden Rahmen nicht auszuschließen wäre, zumal bei einseitigem Eindrücken der Abdeckkappe zwangsläufig ein Verkanten auftritt, bei dem starre Führungsstege sich im feststehenden Rahmen verklemmen würden.

Bei der Ausführungsform gemäß Fig. 2 greift der flexible Steg 2' nicht in den feststehenden Rahmen 3 ein, sondern stützt sich endseitig auf dem Rahmen 3 ab. Auch auf diese Weise ist der Bewegungsspalt 4 abgedeckt. Beim Niederdrücken der Abdeckkappe 1 zur Betätigung der Hupkontakte wird der Steg 2' elastisch verformt und der Bewegungsspalt 4 bis auf einen kleinen Rest zugefahren. Bei dieser Ausführungsform ist es möglich, daß die Kraft zur Rückstellung der Abdeckkappe 1 um den Kontaktweg x und damit zur Lösung der Hupkontakte ganz oder teilweise durch den Steg 2' bereitgestellt werden kann. Auf gesonderte Rückstellfedern kann bei dieser Version daher u.U. verzichtet werden.

Beide Ausführungsformen sind spritztechnisch ohne nennenswerten Mehraufwand ohne weiteres ausführbar, so daß die erfindungsgemäßen Abdeckkappen wie bisher mit leicht modifizierten Spritzgießformen hergestellt werden können.

Bei beiden Ausführungsformen liegt der Steg 2 bzw. 2' innenseitig parallel zu einem umgebogenen Randstreifen 5 der Abdeckkappe 1 und in geringem Abstand von diesem Randstreifen 5, ragt aber zum Rahmen 3 über den Randstreifen 5 hinaus, um den Spalt 4 vollständig zu überdecken.

Bei bevorzugten Ausführungsformen besteht die Abdeckkappe aus einer Tragschicht und einer Deckschicht, wobei die Tragschicht härter ist als die Deckschicht. Der flexible Steg 2 bzw. 2' wird an diejenige Schicht angespritzt, deren Beschaffenheit für die beabsichtigte Funktion des Steges geeignet ist, vorzugsweise an der Deckschicht.

## Patentansprüche

1. Abdeckkappe (1) für die Austrittsöffnung eines in einem Lenkrad untergebrachten Airbags, wobei die Abdeckkappe (1) zur Betätigung der Hupkontakte gegen eine Rückstellkraft im wesentlichen senkrecht zu ihrer flächigen Erstreckung um mindestens den Kontaktabstand beweglich angeordnet ist, **dadurch gekennzeichnet, daß** die Abdeckkappe (1) aus Kunststoff besteht und daß randseitig ein sich in Bewegungsrichtung der Abdeckkappe (1) erstreckender, flexibler Steg (2) angespritzt ist, der bei einer Bewegung der Abdeckkappe (1) zur Betätigung der Hupkontakte elastisch verformt wird.

2. Abdeckkappe nach Anspruch 1, **dadurch gekennzeichnet, daß** der Steg (2) randseitig umlaufend ausgebildet ist.

3. Abdeckkappe nach Anspruch 1 oder 2, **dadurch gekennzeichnet, daß** der Steg (2) den für die Betätigung der Hupkontakte zwischen der Abdeckkappe (1) und einem feststehenden Rahmen (3) erforderlichen Bewegungsspalt (4) überdeckend ausgebildet ist.

4. Abdeckkappe nach einem der Ansprüche 1 bis 3, **dadurch gekennzeichnet, daß** der Steg (2) innenseitig an dem feststehenden Rahmen (3) anliegend ausgebildet ist und daß er sich bei einer Bewegung der Abdeckkappe (1) zur Betätigung der Hupe unter seitlicher Auslenkung teleskopartig in den Rahmen (3) einschiebt.

5. Abdeckkappe nach einem der Ansprüche 1 bis 3, daß der Steg (2') sich bis zum feststehenden Rahmen (3) erstreckt und daß er bei einer Bewegung der Abdeckkappe (1) zur Betätigung der Hupkontakte elastisch zusammengedrückt wird.

6. Abdeckkappe nach Anspruch 5, **dadurch gekennzeichnet, daß** die Rückstellkraft für die Rückstellung der Abdeckkappe (1) und Lösung der Hupkontakte wenigstens zu einem wesentlichen Anteil durch den Steg (2') bereitgestellt wird.

7. Abdeckkappe nach einem der Ansprüche 1 bis 6, **dadurch gekennzeichnet, daß** die Abdeckkappe (1) eine härtere Tragschicht und eine weichere Deckschicht aus Kunststoff umfaßt und daß der flexible Steg (2') an die Deckschicht angespritzt ist.

8. Abdeckkappe nach einem der vorstehenden Ansprüche, **dadurch gekennzeichnet, daß** der flexible Steg (2, 2') innenseitig parallel zu einem umgebogenen Randstreifen (5) in geringem Abstand von diesem und ihn in Richtung des Rahmens (3) überragend angeordnet ist.

## Claims

1. A cover cap (1) for the exit opening of an airbag accommodated in a steering wheel, the cover cap (1), for the purpose of actuating the horn contacts, being movably arranged essentially perpendicularly to its planar extension across at least the contact distance and against a return force, **characterised in that** the cover cap (1) consists of synthetic material and that on the rim side an integrally moulded flexible web (2) is provided which extends in the direction of movement of the cover cap (1) and is elastically deformed upon a movement of the cover cap (1) for actuating the horn contacts.

2. The cover cap according to claim 1, **characterised in that** the web (2) is configured so as to be continuous on the rim side.

3. The cover cap according to claim 1 or 2, **characterised in that** the web (2) is configured so as to cover the clearance (4) between the cover cap (1) and a stationary frame (3), which clearance is required for actuating the horn contacts.

4. The cover cap according to any of the claims 1 to 3, **characterised in that** the web (2) is configured so as to internally contact the stationary frame (3) and that it moves with lateral deflection into the frame (3) like a telescope upon a movement of the cover cap (1) for actuating the horn.

5. The cover cap according to any of the claims 1 to 3, **characterised in that** the web (2') extends as far as to the stationary frame (3) and that it is elastically compressed upon a movement of the cover cap (1) for actuating the horn contacts.

6. The cover cap according to claim 5, **characterised in that** the return force for returning the cover cap (1) and disconnecting the horn contacts is provided by the web (2') at least to a substantial amount.

7. The cover cap according to any of the claims 1 to 6, **characterised in that** the cover cap (1) comprises a harder structural layer and a softer covering layer made of synthetic material, and that the flexible web (2') is integrally moulded to the covering layer.

8. The cover cap according to any of the preceding claims, **characterised in that** the flexible web (2, 2') is arranged inwardly of, parallel to and at a slight distance from a bent rim (5) and so as to project beyond the latter in the direction of the frame (3).

## Revendications

1. Couvercle (1) pour l'orifice de sortie d'un coussin à gaz logé dans un volant de direction, et pour actionner les contacts de klaxon, le couvercle (1) étant agencé de manière mobile d'au moins la distance de contact, sensiblement perpendiculairement à son extension de surface et contre une force de rappel, **caractérisé en ce que** le couvercle (1) est en matière plastique et **en ce que** sur le bord est moulée par injection une languette (2) flexible s'étendant en direction de mouvement du couvercle (1), laquelle est déformée élastiquement lors d'un mouvement du couvercle (1) pour actionner les contacts du klaxon.

2. Couvercle selon la revendication 1, **caractérisé en ce que** la languette (2) est réalisée sur la périphérie du bord.

3. Couvercle selon la revendication 1 ou 2, **caractérisé en ce que** la languette (2) est réalisé de manière à recouvrir la fente située entre le couvercle (1) et un cadre (3) fixe et permettant le mouvement nécessaire à l'actionnement des contacts du klaxon.

4. Couvercle selon l'une des revendications 1 à 3, **caractérisé en ce que** la languette (2) est réalisée de manière à prendre appui sur le cadre fixe (3) et **en ce que** pour un mouvement du couvercle (1) servant à actionner le klaxon, elle s'insère de manière télescopique dans le cadre en étant déviée latéralement.

5. Couvercle selon l'une des revendications 1 à 3, **caractérisé en ce que** la languette (2') s'étend jusqu'au cadre fixe (3) et **en ce qu'**elle est comprimée élastiquement en cas de mouvement du couvercle (1) pour actionner les contacts du klaxon.

6. Couvercle selon la revendication 5, **caractérisé en ce que** la force de rappel pour le retour du couvercle (1) et pour la libération des contacts de klaxon est fournie par la languette (2') au moins pour une part essentielle.

7. Couvercle selon l'une des revendications 1 à 6, **caractérisé en ce que** le couvercle (1) comprend une couche portante plus dure et une couche de recouvrement plus tendre en matière plastique et **en ce que** la languette (2') flexible est moulée par injection avec la couche de recouvrement.

8. Couvercle selon l'une des revendications précédentes, **caractérisé en ce que** la languette est agencée sur la face intérieure, parallèlement à une bande de bordure (5) recourbée, à faible distance de celle-ci et en la dépassant en direction du cadre (3).
